# FASCICULE DE BREVET EUROPEEN

(11) **EP 1 774 195 B1**
(45) Date de publication et mention de la délivrance du brevet: **10.03.2010**
(21) Numéro de dépôt: 05762677.2
(22) Date de dépôt: 11.05.2005
(51) Int. Cl.: F16F 9/48, F16F 9/512

(54) **DISPOSITIF D'AMORTISSEUR A DECELERATION ASSERVIE, ET SON APPLICATION A L'AMORTISSEMENT DE LA COLONNE DE DIRECTION ESCAMOTABLE D'UN VEHICULE AUTOMOBILE**
DÄMPFUNGSVORRICHTUNG MIT HILFSKRAFTUNTERSTÜTZTER VERZÖGERUNG SOWIE DEREN ANWENDUNG ZUR DÄMPFUNG DER ZUSAMMENSCHIEBBAREN LENKSÄULE EINES KRAFTFAHRZEUGS
DAMPING DEVICE WITH POWER-ASSISTED DECELERATION AND USE THEREOF FOR THE DAMPING OF THE RETRACTABLE STEERING COLUMN OF A MOTOR VEHICLE

(30) Priorité: 11.05.2004 FR 0450911
(43) Date de publication de la demande: 18.04.2007
(73) Titulaire: Conseil et Technique, Société à Responsabilité Limitée, 31700 Blagnac (FR)
(72) Inventeur: VALEMBOIS, Guy, F-31700 BLAGNAC (FR)
(74) Mandataire: Rhein, Alain
(86) Numéro de dépôt international: PCT/FR2005/050314
(87) Numéro de publication internationale: WO 2005/114001

(56) Documents cités:
- FR-A- 1 006 531
- GB-A- 191 316 632
- US-A- 3 750 856
- US-A- 4 057 129

## Description

La présente invention a pour objet un dispositif d'amortisseur à décélération asservie, destiné à être utilisé dans le domaine des amortisseurs de chocs hydrauliques.

Les amortisseurs de chocs hydrauliques connus à ce jour permettent de maîtriser l'arrêt d'un objet impacté en provoquant la décélération quasi constante de ce dernier. Cependant pour une conception et des dimensions données de l'amortisseur, le niveau de décélération varie en fonction de la masse dudit objet, ainsi qu'en fonction de sa vitesse d'impact.

Cette caractéristique peut constituer, selon le domaine d'application considéré, une limite à l'utilisation d'un tel dispositif d'amortisseur.

Il en est ainsi, non limitativement, dans le domaine des ascenseurs, des systèmes anti-collision, de la construction automobile et notamment en ce qui concerne les colonnes de direction.

En effet, on sait que le volant est un obstacle traumatisant en cas d'accident automobile pour le conducteur. Afin d'améliorer la sécurité du conducteur, les constructeurs automobiles ont positionné un sac gonflable ou « air bag », apte, en cas d'accident frontal, à se déployer et s'intercaler entre le volant et le conducteur.

Certains constructeurs automobiles proposent de plus une colonne de direction susceptible de s'effacer partiellement vers l'avant lors du choc, permettant ainsi de dégager une course plus importante pour le conducteur. Pour donner une réelle efficacité à ce concept, il est nécessaire que l'effondrement de la colonne de direction se fasse sous un effort contrôlé, effort généré par le conducteur percutant le volant via l'air bag. Cet effort permet de gérer le ralentissement de la personne avec une maîtrise de sa décélération.

Il convient que cette décélération ne soit pas trop élevée pour ne pas être gravement traumatisante, mais il convient aussi que celle-ci ne soit pas trop faible car, alors, le conducteur n'est pas assez « ralenti » et subit un choc violent en fin de course du déplacement de la colonne de direction.

Le niveau de décélération obtenu lors de l'effondrement de la colonne de direction est un paramètre essentiel pour le contrôle de la non létalité dans un accident automobile.

Les constructeurs automobiles réalisent des colonnes de direction qui utilisent des amortisseurs de chocs tels que ceux précités, permettant d'adapter la dynamique de la colonne lors de l'accident sous un effort maîtrisé, ce qui rend optimale l'utilisation de la course de la colonne.

Cependant, la décélération induite par cet effort amortisseur est directement liée à la masse de l'individu percutant la colonne de direction : l'accélération est égale à l'effort amortisseur diminué par la masse percutante. Ainsi, la décélération d'une personne de faible poids est nettement supérieure à celle d'une personne de poids plus élevé.

Par conséquent, une colonne de direction qui s'escamote sous effort constant ne peut pas offrir le même niveau de sécurité à l'ensemble d'une population de corpulence différente.

US-A-4082169 et WO-A-93/22581 montrent des amortisseurs avec un amortissement réduit pendant la phase initiale d'un choc où un clapet ayant une masse d'inertie, est ouvert pendant la phase initiale d'un choc.

La présente invention a pour but de remédier aux divers inconvénients précités en proposant un dispositif d'amortisseur à décélération asservie permettant d'obtenir une décélération constante ou quasi-constante pendant l'impact quelles que soient la masse et la vitesse de l'objet impactant, et qui trouve, non limitativement, une application particulière dans l'asservissement de la dynamique d'une colonne de direction de direction escamotable.

Selon l'invention, le dispositif d'amortisseur à décélération asservie, destiné à être utilisé dans le domaine des amortisseurs de chocs hydrauliques, est du type comprenant un corps fermé empli d'un fluide hydraulique, dans lequel est monté un piston solidaire d'une tige apte à être déplacée axialement hors dudit corps, ladite tige et ledit corps étant agencés en sorte qu'un choc sur l'un, alors que l'autre est solidaire d'un support, provoque le déplacement axial du piston et la compression dudit fluide dans une chambre, et il se caractérise essentiellement en ce qu'il comporte d'une part des moyens d'écoulement conçus aptes à permettre une sortie dudit fluide hydraulique hors de ladite chambre, et d'autre part un élément mobile axialement dans ledit corps et conçu apte à former clapet pour obturer lesdits moyens d'écoulement lorsqu'il est repoussé, dans la direction opposée à celle du choc, par un moyen élastique, ledit élément mobile étant conçu apte à être soumis à la vitesse initiale dudit choc, en sorte que son déplacement soit fonction de sa masse et de la résistance à la compression dudit moyen élastique.

En fonctionnement, le choc a pour conséquence le déplacement du piston dans le corps et la compression du fluide hydraulique dans la chambre de compression, la vitesse initiale de l'impact est également communiquée à l'élément formant clapet et, comme ce dernier n'est lié au corps qu'au travers du moyen élastique, il peut, lors de la décélération, poursuivre son déplacement dans le sens de l'impact en comprimant ledit moyen élastique, et ainsi permettre un écoulement hors de la chambre. Cet écoulement a pour conséquence de réduire la décélération, ce qui entraîne la fermeture du clapet et ainsi de suite.

Le fonctionnement du dispositif amortisseur selon l'invention est donc lié au mouvement du clapet, lequel mouvement est fonction uniquement de la masse du clapet et de la résistance à la compression du moyen élastique.

Selon une caractéristique additionnelle du dispositif selon l'invention, le piston délimite dans le corps deux chambres, une première chambre de compression du fluide, et une seconde destinée à recueillir le fluide hydraulique provenant de ladite première chambre et issu d'une fuite ménagée au niveau dudit piston.

La possibilité de fuite au niveau du piston permet lors de son déplacement une décélération constante ou quasi-constante, avant l'intervention de l'élément mobile formant clapet.

Selon autre caractéristique additionnelle du dispositif selon l'invention, les dimensions transversales de la partie du corps qui délimite la chambre de compression vont en diminuant dans le sens du déplacement du piston lors la compression de ladite chambre.

Selon une autre caractéristique additionnelle du dispositif selon l'invention, l'élément mobile formant clapet présente une forme annulaire ou analogue, et est enfilé sur ou dans une pièce de forme globalement tubulaire qui comporte les moyens d'écoulement du fluide hydraulique hors de la chambre de compression, l'un de ses bords étant destiné à venir au contact d'une partie du corps qui forme le siège dudit clapet.

Selon une autre caractéristique additionnelle du dispositif selon l'invention, le bord de l'élément mobile formant clapet, destiné à venir au contact du siège, présente sur sa face opposée à celle qui obture les moyens d'écoulement, un chanfrein donnant audit bord un profil en sifflet.

Selon une autre caractéristique additionnelle du dispositif selon l'invention, les moyens d'écoulement du fluide hors de la chambre de compression sont associés à des moyens permettant de transférer le fluide écoulé dans la seconde chambre.

Selon une autre forme de réalisation particulière du dispositif selon l'invention, les moyens d'écoulement du fluide hors de la chambre de compression sont agencés au niveau du piston.

Selon une forme de réalisation particulière du dispositif selon l'invention, les moyens d'écoulement du fluide hors de la chambre de compression sont agencés au niveau du corps.

Le dispositif selon l'invention trouvera avantageusement, mais non limitativement une application particulière dans le domaine de l'asservissement de l'amortissement d'une colonne de direction escamotable d'un véhicule automobile.

A cet effet, selon l'invention, le corps est solidaire de la partie de la colonne de direction mobile par rapport au véhicule et la tige est solidaire du véhicule, en sorte que le déplacement de ladite partie mobile entraîne l'extraction de ladite tige hors dudit corps, et la compression par le piston de la chambre de compression qui est conçue apte, selon la position de l'élément mobile par rapport aux moyens d'écoulements, à permettre un écoulement de fluide hydraulique hors dudit corps.

Les avantages et les caractéristiques du dispositif selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en coupe longitudinale d'un premier mode de réalisation d'un dispositif d'amortisseur à décélération asservie selon l'invention.
- la figure 2 représente une vue schématique en coupe longitudinale du même dispositif en fonctionnement lors d'un choc.
- la figure 3 représente une vue schématique en coupe longitudinale d'une variante de ce même dispositif.
- les figures 4a et 4b représentent des vues schématiques d'une partie d'une autre variante du même dispositif.
- la figure 5 représente une vue schématique en coupe longitudinale d'un deuxième mode de réalisation du même dispositif.
- la figure 6 représente une vue en coupe longitudinale d'un troisième mode de réalisation du même dispositif, plus particulièrement destiné à être associé à une colonne de direction escamotable.
- les figures 7a, 7b et 7c représentent des vues schématiques en coupe longitudinale du même dispositif lors de phases différentes de son fonctionnement.

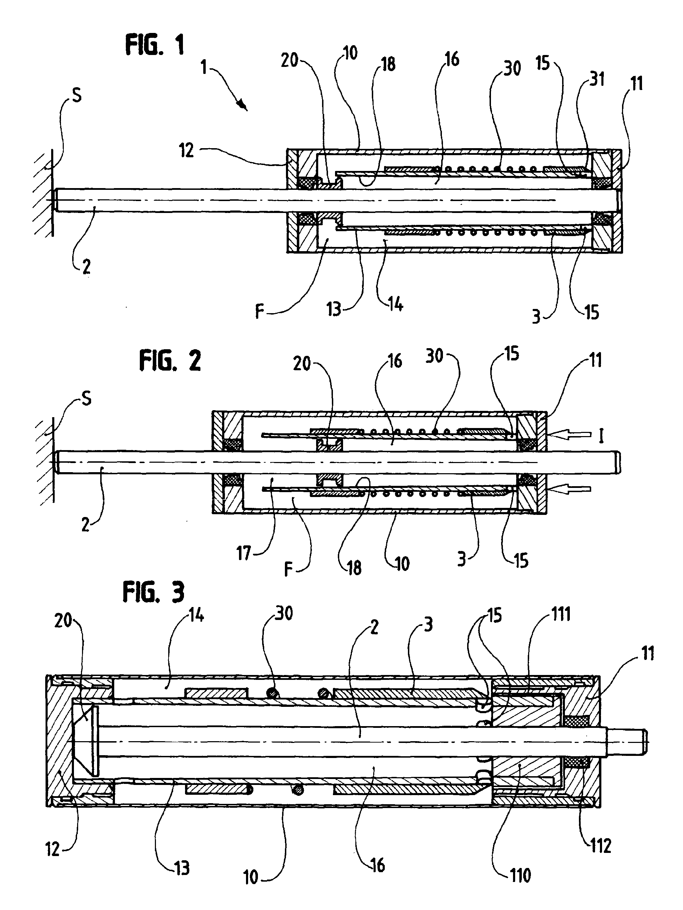

En référence aux figures 1 et 2, on peut voir un premier mode de réalisation 1 d'un dispositif d'amortisseur à décélération asservie selon l'invention.

Il comporte un corps tubulaire 10 fermé à ses deux extrémités par deux flasques 11 et 12, empli d'un fluide hydraulique F, et qui renferme une enveloppe tubulaire 13 de dimensions transversales réduites en sorte de créer un espace périphérique 14.

Les extrémités de l'enveloppe tubulaire 13 sont conformées pour permettre une communication de l'espace périphérique 14 avec l'intérieur de l'enveloppe tubulaire 13 ce qui, du côté du flasque 11, est réalisé par l'intermédiaire de trous radiaux 15.

Le corps 10 est traversé axialement par une tige 2 sur laquelle est calé un piston 20 apte à évoluer longitudinalement dans l'enveloppe tubulaire 13 au gré du déplacement de la tige 2. Le piston 20 sépare l'enveloppe tubulaire 13 en deux chambres, une chambre de compression ou première chambre 16 du côté du flasque 11 et des trous 15, et une seconde chambre 17 de l'autre côté, plus particulièrement visible sur la figure 2.

On notera que la paroi interne 18 de l'enveloppe tubulaire 13 n'est pas cylindrique mais évolutive, c'est-à-dire que son diamètre va en diminuant, de manière linéaire ou non, vers le flasque 11, en sorte de créer une restriction. Cette restriction génère une fuite de fluide hydraulique entre le piston 20 et la paroi 18, fuite dont le débit va en diminuant plus le piston 20 s'approche du flasque 11.

Par ailleurs, les trous 15 sont obturés par un système d'obturation comprenant un élément annulaire 3 qui forme clapet, enfilé sur l'enveloppe tubulaire 13 sur laquelle il est guidé en coulissement, repoussé contre le flasque 11 qui forme siège, par un ressort 30 également enfilé sur l'enveloppe tubulaire 13 et calé sur celle-ci. Le ressort 30 est précontraint en sorte qu'au repos l'élément annulaire 3 ferme les trous 15 et empêche tout écoulement de la première chambre 16 dans l'espace périphérique 14.

En référence plus particulièrement à la figure 2, on peut voir que la tige 2 est placée en butée contre un support S tandis que le corps 10 est soumis à un impact I, ou est solidaire d'un objet lui-même soumis à cet impact.

Sous l'impact I le corps 10 se déplace sur la tige 2, et donc, relativement, le piston 20 se déplace dans l'enveloppe tubulaire 13, en sorte de comprimer le fluide hydraulique F dans la première chambre 16. La restriction permet, au gré de l'enfoncement relatif du piston 20 dans la première chambre 16, de limiter progressivement l'écoulement entre le piston 20 et la paroi 18, donc d'augmenter la pression dans la première chambre 16 et par conséquent de freiner le déplacement du corps 2.

Cette décélération peut être suffisante à faire déplacer l'élément 3 formant clapet sur l'enveloppe annulaire 13 en comprimant le ressort 30. Le déplacement de l'élément 3 formant clapet a pour conséquence la désobstruction des trous 15 permettant ainsi le passage du fluide hydraulique F dans l'espace annulaire 14 et par là-même dans la seconde chambre 17, avec pour effet une baisse de pression dans la première chambre 16 et une réduction de la décélération.

Cette réduction de la décélération provoque, si elle est suffisante, l'obturation des trous 15 par l'élément 3 formant clapet, ce qui crée une augmentation de la pression dans la première chambre 16 et donc une augmentation de la décélération, et ainsi de suite.

On peut voir que le fonctionnement est conditionné par le mouvement de l'élément 3 formant clapet, si la masse de ce dernier est M et qu'il est maintenu par le ressort 30 sous une précontrainte R, le mouvement d'ouverture de l'élément 3 ne pourra se faire que sous une décélération d'une valeur supérieure au rapport R/M.

On notera que de manière avantageuse, le bord extrême de l'élément 3 formant clapet, destiné à venir au contact du flasque 11 formant siège, présente extérieurement un chanfrein 31 lui donnant un profil de sifflet, permettant de créer une perte de charge singulière qui favorise la fermeture de l'élément 3 formant clapet.

Par ailleurs, il y a lieu de remarquer que la forme des trous 15 présente une grande importance, en ce sens qu'elle peut contribuer à une modification des caractéristiques de l'écoulement et donc de l'asservissement. En effet, dans son mouvement d'ouverture l'élément 3 formant clapet découvre progressivement les trous 15, et selon la forme de ceux-ci l'augmentation du débit d'écoulement est plus au moins progressive. De plus, l'élément 3 formant clapet découvre les trous 15 en commençant par la partie inférieure de ceux-ci, et la forme de cette dernière influe sur le débit initial de l'écoulement. Ainsi, l'accroissement du débit d'écoulement n'est pas le même si les trous sont ronds, carrés, triangulaires ou autres.

Le choix de la forme des trous peut ainsi permettre de régler l'asservissement.

En référence maintenant à la figure 3, on peut voir un exemple de construction du dispositif 1. On y reconnaît le corps tubulaire 10, les deux flasques 11 et 12, l'enveloppe tubulaire 13 et l'espace périphérique 14, les trous radiaux 15, la chambre de compression 16, la tige 2 et son piston 20, l'élément annulaire 3 qui forme clapet, et le ressort 30 précontraint.

Dans ce mode de construction, la tige 2 ne traverse que le flasque 11, lequel est associé à une pièce 110 de guidage permettant de porter la tige 2 sur une grande longueur, et qui est disposée contre le flasque 11 du côté interne. Dans cet exemple, l'enveloppe tubulaire 13 est constituée d'un tube intercalé entre les deux flasques 11 et 12, et la pièce 110 est introduite dans l'extrémité du tube du côté du flasque 11. On notera que de manière avantageuse, il est ménagé entre le flasque 11 et cette extrémité du tube, un passage 111, permettant au fluide hydraulique F d'atteindre le joint d'étanchéité 112 du flasque 11, afin de protéger ce joint 112.

On notera que de manière avantageuse le passage 111 débouche dans l'espace périphérique 14 où le fluide hydraulique F n'est jamais soumis à une haute pression créée par le piston 20 lors de l'impact, il en est donc de même pour le joint 112.

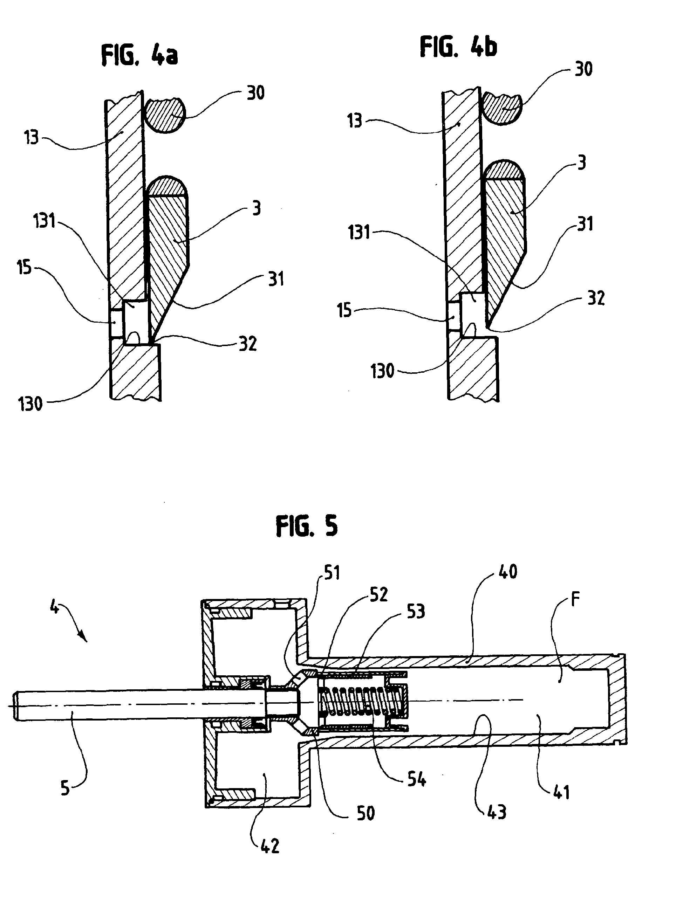

En référence maintenant aux figures 4a et 4b, on peut observer un mode de fabrication du dispositif selon l'invention, et plus particulièrement en ce qui concerne l'élément 3 formant clapet, l'enveloppe tubulaire 13 et les trous radiaux 15.

D'une part, l'enveloppe 13 présente une différence de niveau, en réalité une différence d'épaisseur, qui crée un épaulement 130 destiné à constituer le siège et donc à recevoir l'extrémité 32 de l'élément 3 lorsque celui-ci est rappelé par le ressort 30.

On notera que le dispositif représenté sur la figure 3 est réalisé selon ce mode de construction.

D'autre part, l'enveloppe 13 comporte périphériquement du côté d'évolution de l'élément mobile 3, une gorge 131, dans le fond de laquelle sont réalisés les trous 15, et dont une paroi coïncide avec l'épaulement 130.

Cette construction permet avantageusement de ne pas limiter l'écoulement du fluide F au diamètre des trous 15, puisqu'il peut être réalisé sur toute la périphérie dans l'espace ménagé entre l'épaulement 130 et l'extrémité 32 de l'élément 3 lors du déplacement de celui-ci comme cela apparaît sur la figure 4b.

En référence maintenant à la figure 5, on peut voir un deuxième mode de réalisation 4 du dispositif selon l'invention. Dans ce mode de réalisation, contrairement à celui représenté sur les figures 1 et 2 où l'élément formant clapet est monté sur le corps 10, on peut voir qu'il peut être monté sur le piston.

Ce mode de réalisation 4 comprend un corps 40 empli d'un fluide hydraulique F, dans lequel peut se déplacer une tige 5 munie à l'une de ses extrémités d'un piston 50 qui sépare l'espace intérieur du corps 40 en une première chambre 41 et une seconde chambre 42.

La paroi interne 43 du corps 4 au niveau de la première chambre 41 présente une restriction en sorte de permettre une fuite de débit décroissant au gré de l'enfoncement du piston 50.

Le piston 50 comporte du côté de la seconde chambre 42 des ouvertures 51, ainsi que périphériquement du côté de la première chambre 41 des ouvertures 52, lesquelles sont obturées par un élément annulaire 53 formant clapet, mobile axialement et repoussé dans le sens de la fermeture par un ressort 54, c'est-à-dire dans le sens opposé à l'enfoncement du piston 50 dans la première chambre 41.

Le fonctionnement de ce dispositif 4 est analogue à celui du dispositif 1, c'est-à-dire qu'il est conditionné par l'élément 53 formant clapet.

On notera que les caractéristiques décrites aux figures 4a et 4b, peuvent également concerner ce mode de réalisation.

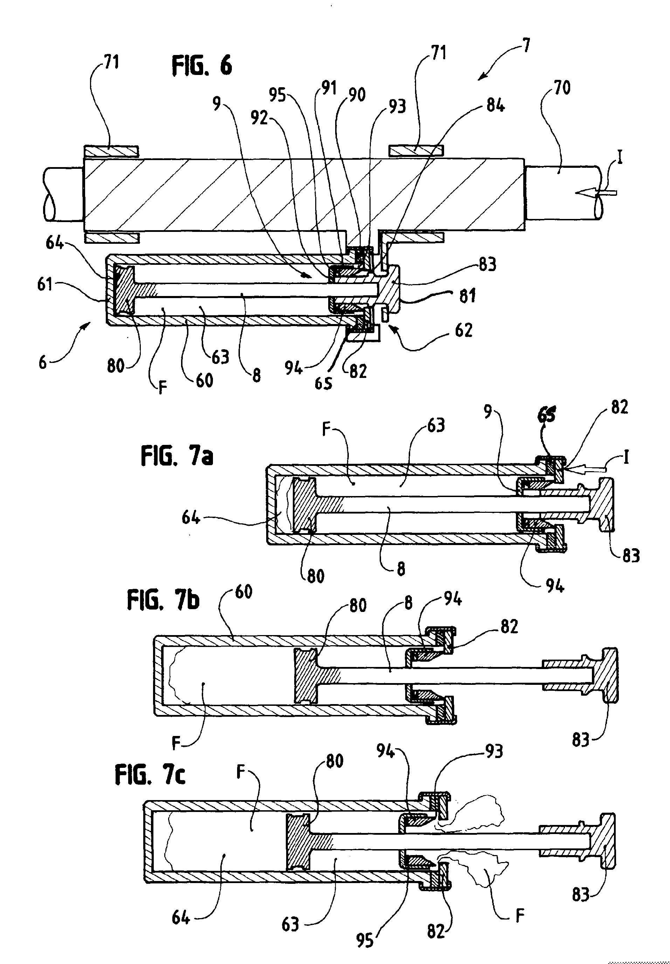

En référence maintenant à la figure 6, on peut voir un troisième mode de réalisation 6 du dispositif selon l'invention. Ce dispositif 6 est associé à un système 7 de colonne de direction 70 escamotable. Ce système 7 comprend des supports 71 fixement solidaires du véhicule, dans lesquels peut coulisser la colonne de direction 70 en vue de sa rétractabilité lors d'un choc violent appliqué sur le volant.

Le dispositif 6 comprend un corps 60 se présentant sous la forme d'une enveloppe tubulaire, emplie d'un fluide hydraulique F, limitée d'un côté par un fond 61 et de l'autre par un flasque 62 qui sera décrit plus en détail plus loin.

Le flasque 62 est traversé par une tige 8 munie à son extrémité interne au corps 60, d'un piston 80. Tel que cela est représenté sur la figure 6, avant fonctionnement, la tige 8 est rentrée, le piston 80 est au contact ou à proximité du fond 61, et il délimite dans le corps 60, tout en autorisant une certaine fuite, une première chambre 63 entre lui et le flasque 62 et, entre lui et le fond 61, une seconde chambre 64, encore inexistante sur la figure 6 puisque le piston 80 est au contact du fond 61.

Le flasque 62 présente des caractéristiques particulières liées au fait que le dispositif 6 ne doit fonctionner qu'une seule fois, et que l'étanchéité doit être garantie pendant toute la durée de vie du véhicule qui en est équipé. A cet effet il est réalisé sans aucune pièce dynamique tel qu'un joint.

Le flasque 62 comprend ainsi deux pièces qui coopèrent, à savoir une culasse 9 traversée par la tige 8, et une pièce 81 solidaire de l'extrémité de la tige 8, la culasse 9 et la pièce 81 étant serties sur le corps 60 au moyen d'une bague 65.

La pièce 81 comprend deux parties, une partie périphérique 82 en forme de disque qui est sertie par la bague 65, et une partie centrale 83 solidarisée à l'extrémité de la tige 8, ces deux parties 82 et 83 étant reliées par une zone 84 de moindre résistance permettant, sous un certain effort de traction, de désolidariser les deux parties 82 et 83.

La culasse 9 comporte deux parties, une partie périphérique 90 en forme de disque qui est sertie par la bague 65, et une partie centrale 91 qui présente une forme tubulaire qui s'étend dans le corps 60 et qui est fermée de ce côté là par un fond 92. Les parties 90 et 91 sont réunies par une zone intermédiaire percée de trous 93 autorisant le passage du fluide hydraulique F jusqu'à la pièce 81.

La partie 91 renferme un élément tubulaire 94 formant clapet repoussé, par l'intermédiaire d'un ressort 95 intercalé entre lui et le fond 92, contre la pièce 81, ou plus exactement la partie périphérique 82 en forme de disque de celle-ci, dans le but d'obturer les trous 93.

Le dispositif 6 est associé au système 7 de la manière suivante, le corps 60 est solidaire de la colonne 70, tandis que la pièce 81 est maintenue solidaire par sa partie centrale 83 aux supports 71 fixement solidaires du véhicule.

En référence également aux figures 7a, 7b et 7c, on peut comprendre le fonctionnement du dispositif 6. Lors d'un choc I sur le volant, celui-ci est répercuté au corps 60 par l'intermédiaire de la colonne de direction 70 qui s'enfonce, alors que les supports 71 demeurent fixes et maintiennent la partie 83 de la pièce 81.

Sous l'impact I, la zone 84 rompt et les pièces 82 et 83 se séparent, le piston 80 se déplace de manière relative dans le corps 60 en comprimant le fluide hydraulique F dans la première chambre 63, tandis que la fuite permet le remplissage de la seconde chambre 64.

Lorsque la décélération du corps 60 a atteint un certain niveau, l'élément 94 continue sur sa lancée en sorte de désobturer les trous 93 et autoriser une fuite de fluide hydraulique F vers l'extérieur, réduisant ainsi la pression dans la première chambre 63, et par conséquent la décélération.

On obtient ainsi un amortissement asservi de l'escamotage de la direction, ce qui offre le même niveau de sécurité à tous les conducteurs quelle que soit leur corpulence.

Il est à noter que selon une variante du dispositif 6, appliqué à un système d'asservissement d'une colonne de direction ou à un autre système, le piston 80 est conçu étanche ou quasi étanche en sorte qu'il n'y ait pas de fuite vers la seconde chambre, et que cette fuite se fasse uniquement vers l'extérieur.

Du point de vue construction, quel que soit le mode de réalisation considéré, les différents éléments sont réalisés dans les matériaux habituellement utilisés tels que les métaux, mais également les matières plastiques.

## Revendications

1. Dispositif d'amortisseur (1 ; 4 ; 6) à décélération asservie, destiné à être utilisé dans le domaine des amortisseurs de chocs hydrauliques, du type comprenant un corps fermé (10 ; 40 ; 60) empli d'un fluide hydraulique (F), dans lequel est monté un piston (20 ; 50 ; 80) solidaire d'une tige (2 ; 5 ; 8) apte à être déplacée axialement hors dudit corps (10 ; 40 ; 60), ladite tige (2 ; 5 ; 8) et ledit corps (10 ; 40 ; 60) étant agencés en sorte qu'un choc sur l'un, alors que l'autre est solidaire d'un support, provoque le déplacement axial dudit piston (20 ; 50 ; 80) et la compression dudit fluide (F) dans une chambre (16 ; 41 ; 63), **caractérisé en ce qu**'il comporte d'une part des moyens d'écoulement (15 ; 52 ; 93) conçus aptes à permettre une sortie dudit fluide hydraulique (F) hors de ladite chambre (16 ; 41 ; 63), et d'autre part un élément (3 ; 53 ; 94) mobile axialement dans ledit corps (10 ; 40 ; 60), qui forme un clapet pour obturer lesdits moyens d'écoulement (15 ; 52 ; 93) lorsqu'il est repoussé, dans la direction opposée à celle du choc (I), par un moyen élastique (30 ; 54 ; 95,), ledit élément mobile (3 ; 53 ; 94) étant soumis à la vitesse initiale dudit choc (I), en sorte que son déplacement soit fonction de sa masse et de la résistance à la compression dudit moyen élastique (30 ; 54 ; 95).

2. Dispositif (1 ; 4 ; 6) selon la revendication 1, **caractérisé en ce que** le piston (20 ; 50 ; 80) délimite dans le corps (10 ; 40 ; 60) deux chambres, une première chambre (16 ; 41 ; 63) de compression du fluide (F), et une seconde (17 ; 42 ; 64) destinée à recueillir le fluide hydraulique (F) provenant de ladite première chambre (16 ; 41 ; 63) et issu d'une fuite ménagée au niveau dudit piston (20 ; 50 ; 80).

3. Dispositif (1 ; 4 ; 6) selon la revendication 1 ou la revendication 2, **caractérisé en ce que** les dimensions transversales de la partie du corps qui délimite la chambre de cmpression (16 ; 41 ; 63) vont en diminuant, de manière linéaire ou non, dans le sens du déplacement du piston (20 ; 50 ; 80) lors la compression de ladite chambre (16 ; 41 ; 63), en sorte de créer une restriction.

4. Dispositif (1 ; 4 ; 6) selon l'une quelconque des revendications précédentes, **caractérisé en ce que** l'élément mobile formant clapet (3 ; 53 ; 94) présente une forme annulaire ou analogue, et est enfilé sur ou dans une pièce de forme globalement tubulaire (13 ; 50 ; 91) qui comporte les moyens d'écoulement (15 ; 52 ; 93) du fluide hydraulique (F) hors de la chambre de compression (16 ; 41 ; 63), l'un de ses bords (32) étant destiné à venir au contact d'une partie (11 ; 130 ; 82) du corps (10 ; 40 ; 60) qui forme le siège dudit clapet (3 ; 53 ; 94).

5. Dispositif (1 ; 4 ; 6) selon la revendication 4, **caractérisé en ce que** le bord (32) de l'élément mobile (3 ; 53 ; 94) formant clapet, destiné à venir au contact du siège (11 ; 130 ; 82), présente sur sa face opposée à celle qui obture les moyens d'écoulement (15 ; 52 ; 93), un chanfrein (31) donnant audit bord un profil en sifflet.

6. Dispositif (1 ; 4) selon la revendication 4 ou la revendication 5, **caractérisé en ce que** le siège consiste en un épaulement (130) venant d'une différence de niveau de la pièce de forme globalement tubulaire (13 ; 50) sur ou dans laquelle est enfilé l'élément mobile formant clapet (3 ; 53).

7. Dispositif (1 ; 4) selon l'une quelconque des revendications 4 à 6, **caractérisé en ce que** les moyens d'écoulement (15 ; 52) consistent en des trous (15) pratiqués dans une gorge périphérique (131) que comporte la pièce (13 ; 50) de forme globalement tubulaire du côté d'évolution de l'élément mobile formant clapet (3 ; 53).

8. Dispositif (1 ; 4) selon l'une quelconque des revendications 2 à 7, **caractérisé en ce que** les moyens d'écoulement (15 ; 52) du fluide (F) hors de la chambre de compression (16 ; 41) sont associés à des moyens permettant de transférer le fluide écoulé dans la seconde chambre (17 ; 42).

9. Dispositif (4) selon l'une quelconque des revendications 2 à 8, **caractérisé en ce que** les moyens d'écoulement (52) du fluide (F) hors de la chambre de compression (41) sont agencés au niveau du piston (50).

10. Dispositif (4) selon la revendication 9, **caractérisé en ce que** le piston (50) comporte des ouvertures (51) du côté de la seconde chambre (42), ainsi que périphériquement des ouvertures (52) du côté de la chambre de compression (41), ces dernières étant obturées par un élément mobile (53) formant clapet et repoussé par un moyen élastique (54) dans le sens opposé à l'enfoncement dudit piston (50) dans ladite chambre de compression (41).

11. Dispositif (1) selon l'une quelconque des revendications 1 à 8, **caractérisé en ce que** les moyens d'écoulement (15) du fluide (F) hors de la chambre de compression (16) sont agencés au niveau du corps (10).

12. Dispositif (1) selon la revendication 11, **caractérisé en ce que** le corps tubulaire (10) renferme une enveloppe tubulaire (13) qui accueille le piston (20), et dont les extrémités sont conformées pour permettre une communication de l'espace périphérique (14) avec l'intérieur de ladite enveloppe tubulaire (13) pour former d'un côté les moyens (15) d'écoulement du fluide (F) hors de la chambre de compression (16), et sur laquelle est guidé en coulissement l'élément mobile formant clapet (3).

13. Dispositif (6) selon l'une quelconque des revendications 1 à 5, **caractérisé en ce que** le corps (60) se présente sous la forme d'une enveloppe tubulaire, emplie d'un fluide hydraulique (F), limitée d'un côté par un fond (61) et de l'autre par un flasque (62) traversé par une tige (8) munie à son extrémité, interne au corps (60), d'un piston (80) qui délimite avec ledit flasque (62) la chambre de compression (63).

14. Dispositif (6) selon la revendication 13, **caractérisé en ce que** le flasque (62) comprend deux pièces serties sur le corps, une première (9) qui consiste en une culasse incorporant les moyens (93) d'écoulement hors de la chambre de compression (63) et une pièce de forme globalement tubulaire (91) qui renferme l'élément mobile formant clapet (94), et une deuxième (81) constituant le siège dudit clapet (94).

15. Dispositif (6) selon la revendication 14, **caractérisé en ce que** la deuxième pièce (81) comprend deux parties, une partie périphérique (82) en forme de disque et une partie centrale (83) solidarisée à l'extrémité de la tige (8), ces deux parties (82, 83) étant reliées par une zone (84) de moindre résistance destinée à rompre sous un certain effort de traction.

16. Application du dispositif (6) selon l'une quelconque des revendications 13 à 15, à l'amortissement d'une colonne de direction (7) escamotable d'un véhicule automobile et dans laquelle, le corps (60) dudit dispositif (6) est solidaire de la partie (70) de la colonne de direction mobile par rapport au véhicule, tandis que la tige (8) est solidaire dudit véhicule, en sorte que le déplacement de ladite partie mobile (70) entraîne l'extraction de ladite tige (8) hors dudit corps (60) et la compression par le piston (80) de la chambre de compression (63).

## Claims

1. Damping device (1; 4;6) with power-assisted deceleration, for use in the field of the hydraulic shock absorbers, of the type comprising a sealed body (10 ; 40 ; 60) filled with hydraulic fluid (F), in which is mounted a piston (20 ; 50 ; 80) integral with a rod (2 ; 5 ; 8) capable of being moved axially out of said body (10 ; 40 ; 60), said rod (2 ; 5; 8) and said body (10 ; 40 ; 60) being arranged so that a strike against one of them, while the other one is integral with a support, causes the axial displacement of the piston (20 ; 50 ; 80) and the compression of said fluid (F) in a chamber (16; 41; 63), wherein the damping device comprises, on the one hand, flow means (15; 52; 93) designed capable of allowing said hydraulic fluid (F) to be released from said chamber (16; 41; 63) and, on the other hand, an element (3 ; 53 ; 94) which can move axially inside said body (10 ; 40 ; 60), which forms a check valve for closing said flow means (15; 52; 93) when pushed back in the direction opposite to that of the impact (I) by elastic means (30 ; 54 ; 95), said movable element (3 ; 53 ; 94) being subjected to the initial speed of said impact (I), so that its displacement depends on its mass and on the compressive strength of said elastic means (30 ; 54 ; 95).

2. Device (1 ; 4 ; 6) according to claim 1, wherein the piston (20 ; 50 ; 80) delimits in the body (10 ; 40 ; 60) two chambers, a first compression chamber (16 ; 41 ; 63) for the fluid (F), and a second chamber (17 ; 42 ; 64) for collecting the hydraulic fluid (F) coming from said first chamber (16 ; 41 ; 63) and proceeding from an escape provided for at the level of said piston (20 ; 50 ; 80).

3. Device (1 ; 4 ; 6) according to claim 1 or claim 2, wherein the transverse dimensions of the portion of the body which delimits the compression chamber (16 ; 41 ; 63) are decreasing, linearly or not, in the direction of the displacement of the piston (20 ; 50 ; 80) during the compression of said chamber (16 ; 41 ; 63), so as to create a narrowing.

4. Device (1 ; 4 ; 6) according to any of the preceding claims, wherein the movable element forming a check valve (3 ; 53 ; 94) has an annular or similar form, and is inserted onto or into a part of a globally tubular shape (13 ; 50 ; 91), which includes the means (15 ; 52 ; 93) for the hydraulic fluid (F) to flow out of the compression chamber (16 ; 41 ; 63), one of its edges (32) being intended to come into contact with a portion (11 ; 130 ; 82) of the body (10 ; 40 ; 60) which forms the seat of said valve (3 ; 53 ; 94).

5. Device (1 ; 4 ; 6) according to claim 4, wherein the edge (32) of the movable element (3 ; 53 ; 94) forming a check valve, intended to come into contact with the seat (11 ; 130 ; 82), has on its face opposite that which seals the flow means (15 ; 52 ; 93), a chamfer (31) conferring to said edge a whistle-like profile.

6. Device (1 ; 4) according to claim 4 or claim 5, wherein the seat consists of a shoulder (130) resulting from a difference in level of the part with a globally tubular shape (13 ; 50) on or in which is inserted the movable element forming a check valve (3 ; 53).

7. Device (1 ; 4) according to any of claims 4 to 6, wherein the flow means (15 ; 52) consist of holes (15) provided for in a peripheral groove (131) the part (13 ; 50) of a globally tubular shape includes on the side of evolving of the movable element forming a check valve (3 ; 53).

8. Device (1 ; 4) according to any of claims 2 to 7, wherein the means (15 ; 52) for the fluid (F) to flow out of the compression chamber (16 ; 41) are associated with means allowing to transfer the fluid flown out into the second chamber (17 ; 42).

9. Device (4) according to any of claims 2 to 8, wherein the means (52) for the fluid (F) to flow out of the compression chamber (41) are arranged at the level of the piston (50).

10. Device (4) according to claim 9, wherein the piston (50) includes openings (51) on the side of the second chamber (42), as well as peripherally openings (52) on the side of the compression chamber (41), the latter being sealed by a movable element (53) forming a check valve and pushed back by a elastic means (54) in the direction opposite to the insertion of said piston (50) into said compression chamber (41).

11. Device (1) according to any of claims 1 to 8, wherein the means (15) for the fluid (F) to flow out of the compression chamber (16) are arranged at the level of the body (10).

12. Device (1) according to claim 11, wherein the tubular body (10) contains a tubular jacket (13), which accommodates the piston (20), and whose ends are formed so to allow a communication of the peripheral space (14) with the interior of said tubular jacket (13), in order to form, on one side, the means (15) for the fluid (F) to flow out of the compression chamber (16) and on which is slideably guided the movable element forming a check valve (3).

13. Device (6) according to any of claims 1 to 5, wherein the body (60) is in the form of a tubular jacket filled with hydraulic fluid (F), limited, on one side, by a bottom (61) and, on the other side, by a flange (62) through which passes a rod (8) provided at its end, internal to the body (60), with a piston (80), which delimits with said flask (62) the compression chamber (63).

14. Device (6) according to claim 13, wherein the flange (62) comprises two parts crimped onto the body, a first one (9) which consists of a cylinder head incorporating the means (93) for flowing out of the compression chamber (63) and a part of a globally tubular shape (91) which contains the movable element forming a check valve (94), and a second one (81) forming the seat of said check valve (94).

15. Device (6) according to claim 14, wherein the second part (81) comprises two portions, a peripheral portion (82) in the form of a disc and a central portion (83) made integral with the end of the rod (8), these two portions (82, 83) being connected by an area (84) of lower resistance aimed at breaking under a certain tensile force.

16. Application of the device (6) according to any of claims 13 to 15 to the damping of a retractable steering column (7) of a motor vehicle and in which, the body (60) of said device (6) is integral with the portion (70) of the steering column movable with respect to the vehicle, while the rod (8) is integral with said vehicle, so that the displacement of said moving portion (70) causes said rod (8) to be extracted out of said body (60) and the compression by the piston (80) of the compression chamber (63).

## Patentansprüche

1. Dämpfungsvorrichtung (1; 4;6) mit kraftunterstützter Verzögerung, für Verwendung auf dem Gebiet der hydraulischen Stoßdämpfer, der Art umfassend einen mit hydraulischem Fluidum (F) gefüllte, geschlossenen Körper (10 ; 40 ; 60), in dem ein fest mit einer Stange (2 ; 5 ; 8) verbundener Kolben (20 ; 50 ; 80) gelagert ist, der geeignet ist, axial aus dem besagten Körper (10 ; 40 ; 60) heraus bewegt zu werden, wobei die besagte Stange (2 ; 5; 8) und der besagte Körper (10 ; 40 ; 60) so angeordnet sind, dass ein Stoß gegen einen dieser letzten, während der andere fest mit einem Halter verbunden ist, die Axialbewegung des Kolbens (20 ; 50 ; 80) und das Zusammendrücken des besagten Fluidums (F) in einer Kammer (16; 41; 63) veranlaßt, **dadurch gekennzeichnet, dass** die Dämpfungsvorrichtung, einerseits, Abflußmittel (15; 52; 93), die geeignet vorgesehen sind, um es dem hydraulischen Fluidum (F) zu erlauben, aus der besagten Kammer (16; 41; 63) herauszufließen, und, andererseits, ein innerhalb des besagten Körpers (10 ; 40 ; 60) bewegliches, ein Ventil bildendes Element (3 ; 53 ; 94) umfasst, um die besagten Abflußmittel (15; 52; 93) zu schließen, wenn es durch elastische Mittel (30 ; 54 ; 95) in einer Richtung, die derjenigen des Stoßes (I) gegenüberliegt, zurückgestoßen wird, wobei das bewegliche Element (3 ; 53; 94) der Anfangsgeschwindigkeit des besagten Stoßes (I) ausgesetzt ist, sodass seine Verschiebung von seiner Masse und von der Druckfestigkeit des besagten elastischen Mittels (30 ; 54 ; 95) abhängig ist.

2. Vorrichtung (1 ; 4 ; 6) nach Anspruch 1, **dadurch gekennzeichnet, dass** der Kolben (20 ; 50 ; 80) im Körper (10 ; 40 ; 60) zwei Kammern abgrenzt, eine erste Druckkammer (16; 41 ; 63) für das Fluidum (F), und eine zweite Kammer (17 ; 42 ; 64) Zum Auffangen des hydraulischen Fluidums (F), das von der besagten ersten Kammer (16 ; 41 ; 63) und von einer im Bereich des besagten Kolbens (20 ; 50 ; 80) vorgesehenen Undichtigkeit stammt.

3. Vorrichtung (1 ; 4 ; 6) nach Anspruch 1 oder Anspruch 2, **dadurch gekennzeichnet, dass** die Querabmessungen des Teils des Körpers, das die Druckkammer (16 ; 41 ; 63) abgrenzt, während dem Zusammendrücken der besagten Kammer (16 ; 41 ; 63) in Richtung der Verschiebung des Kolbens (20 ; 50 ; 80) linear oder nichtlinear abnehmen, sodass eine Verengung geschaffen wird.

4. Vorrichtung (1 ; 4 ; 6) nach irgendeinem der vorgehenden Ansprüche, **dadurch gekennzeichnet, dass** das ein Ventil (3 ; 53 ; 94) bildende bewegliche Element eine ringförmige oder dergleichen Gestalt hat und auf oder in einen Teil mit einer insgesamt röhrförmigen Gestalt (13 ; 50 ; 91) gesteckt wird, das die Mittel (15 ; 52 ; 93) zum Herausfließen des hydraulischen Fluidums (F) aus der Druckkammer (16 ; 41 ; 63) umfasst, wobei einer seiner Ränder (32) dazu bestimmt ist, mit einem Teil (11 ; 130 ; 82) des Körpers (10 ; 40 ; 60), das den Sitz des besagten Ventils (3 ; 53 ; 94) bildet, in Berührung zu kommen.

5. Vorrichtung (1 ; 4 ; 6) nach Anspruch 4, **dadurch gekennzeichnet, dass** der Rand (32) des ein Ventil bildenden beweglichen Elements (3 ; 53 ; 94), der dazu bestimmt ist, mit dem Sitz (11 ; 130 ; 82) in Berührung zu kommen, auf seiner Fläche, die derjenigen gegenüberliegt, die die Abflußmittel (15 ; 52 ; 93) schließt, eine Abschrägung (31) aufweist, die dem besagten Rand ein schäftförmiges Profil verleiht.

6. Vorrichtung (1 ; 4) nach Anspruch 4 oder Anspruch 5, **dadurch gekennzeichnet, dass** der Sitz aus einem Ansatz (130) besteht, der sich aus einem Pegelunterschied des Teils mit einer insgesamt röhrförmigen Gestalt (13 ; 50), auf oder in dem das ein Ventil bildende bewegliche Element (3 ; 53) gesteckt ist, ergibt.

7. Vorrichtung (1 ; 4) nach irgendeinem der Ansprüche 4 bis 6, **dadurch gekennzeichnet, dass** die Abflußmittel (15 ; 52) aus Löchern (15) bestehen, die in einer Randnut (131) vorgesehen sind, die der Teil (13 ; 50) mit einer insgesamt röhrförmigen Gestalt an der Seite der Verschiebung des ein Ventil bildenden beweglichen Elements (3 ; 53) umfasst.

8. Vorrichtung (1 ; 4) nach irgendeinem der Ansprüche 2 bis 7, **dadurch gekennzeichnet, dass** die Mittel (15 ; 52) zum Herausfließen des Fluidums (F) aus der Druckkammer (16 ; 41) Mitteln zugeordnet sind, die es erlauben, das herausgeflossene Fluidum in die zweite Kammer (17 ; 42) zu bringen.

9. Vorrichtung (4) nach irgendeinem der Ansprüche 2 bis 8, **dadurch gekennzeichnet, dass** die Mittel (52) zum Herausfließen des Fluidums (F) aus der Druckkammer (41) im Bereich des Kolbens (50) angeordnet sind.

10. Vorrichtung (4) nach Anspruch 9, **dadurch gekennzeichnet, dass** der Kolben (50) Öffnungen (51) an der Seite der zweiten Kammer (42) sowie Randöffnungen (52) an der Seite der Druckkammer (41) umfasst, wobei diese letzteren von einem, ein Ventil bildenden beweglichen Element (53) geschlossen und von elastischen Mitteln (54) in der Richtung, die der Einführung des besagten Kolbens (50) in die besagte Druckkammer (41) gegenüberliegt, zurückgestoßen werden.

11. Vorrichtung (1) nach irgendeinem der Ansprüche 1 bis 8, **dadurch gekennzeichnet, dass** die Mittel (15) zum Herausfließen des Fluidums (F) aus der Druckkammer (16) im Bereich des Körpers (10) angeordnet sind.

12. Vorrichtung (1) nach Anspruch 11, **dadurch gekennzeichnet, dass** der rohrförmige Körper (10) einen rohrförmigen Mantel (13) enthält, der den Kolben (20) aufnimmt, und dessen Enden so gestaltet sind, dass sie eine Verbindung des Randraums (14) mit dem Inneren des besagten rohrförmigen Mantels (13) erlauben, um an einer Seite die Mittel (15) zum Herausfließen des Fluidums (F) aus der Druckkammer (16) zu bilden, und auf dem das ein Ventil bildende bewegliche Element (3) gleitend geführt wird.

13. Vorrichtung (6) nach irgendeinem der Ansprüche 1 bis 5, **dadurch gekennzeichnet, dass** der Körper (60) als ein mit hydraulischem Fluidum (F) gefüllter Mantel ausgestaltet ist, der an einer Seite durch einen Boden (61) und an der anderen Seite durch einen Flansch (62) begrenzt ist, der von einer Stange (8) durchsetzt ist, die an ihrem zum Körper (60) inwendigen Ende mit einem Kolben (80) versehen ist, der mit dem besagten Flansch (62) die Druckkammer (63) abgrenzt.

14. Vorrichtung (6) nach Anspruch 13, **dadurch gekennzeichnet, dass** der Flansch (62) zwei auf dem Körper angepreßte Teile umfasst, einen ersten Teil (9), der aus einem Kolbenkopf, der die Mittel (93) zum Herausfließen aus der Druckkammer (63) umfasst, und einem Teil mit einer insgesamt röhrförmigen Gestalt (91), der das ein Ventil bildende bewegliche Element (94) beinhält, besteht, und einen zweiten Teil (81), der den Sitz des besagten Ventils (94) bildet.

15. Vorrichtung (6) nach Anspruch 14, **dadurch gekennzeichnet, dass** der zweite Teil (81) zwei Teile umfasst, einen als eine Scheibe ausgestalteten Randteil (82) und einen fest mit dem Ende der Stange (8) verbundenen zentralen Teil (83), wobei diese beide Teile (82, 83) durch einen Bereich (84) geringeren Stärke, der dazu bestimmt ist, bei einer gewissen Zugkraft zu brechen, mit einander verbunden sind.

16. Anwendung der Vorrichtung (6) nach irgendeinem der Ansprüche 13 bis 15 zur Dämpfung einer zusammenschiebbaren Lenksäule (7) eines Kraftfahrzeuges, bei der der Körper (60) der besagten Vorrichtung (6) fest mit dem Teil (70) der Lenksäule verbunden ist, der bezüglich des Fahrzeuges beweglich ist, während die Stange (8) fest mit dem besagten Fahrzeug verbunden ist, sodass die Verschiebung des besagten beweglichen Teils (70) das Herausziehen der besagten Stange (8) aus dem besagten Körper (60) und das Zusammendrücken der Druckkammer (63) durch den Kolben (80) veranlasst.
